# EUROPEAN PATENT SPECIFICATION

(11) **EP 3 112 209 B1**
(45) Date of publication and mention of the grant of the patent: **17.05.2017**
(21) Application number: 15461545.4
(22) Date of filing: 03.07.2015
(51) Int. Cl.: B60N 2/28, B60R 22/195, B60R 22/32

(54) **CHILD SAFETY SEAT WITH A DEVICE FOR PRETENSIONING INTEGRATED SAFETY BELTS RESTRAINING A CHILD IN THE SEAT**
KINDERSICHERHEITSSITZ MIT EINER VORRICHTUNG ZUM VORSPANNEN VON INTEGRIERTEN SICHERHEITSGURTEN ZUM ZURÜCKHALTEN EINES KINDES IM SITZ
SIÈGE DE SÉCURITÉ ENFANT AVEC UN DISPOSITIF DE PRETENSION DE LA CEINTURE DE SÉCURITÉ INTÉGRÉE POUR LE MAINTIENT D'UN ENFANT DANS LE SIÈGE

(43) Date of publication of application: 04.01.2017
(73) Proprietor: Przemyslowy Instytut Motoryzacji, 03-301 Warszawa (PL); IDAP Technology Sp. z o.o., 03-301 Warszawa (PL)
(72) Inventor: Muszynski, Andrzej, 05-850 Szeligi (PL); Muszynski, Artur, 05-850 Szeligi (PL)
(74) Representative: Sielewiesiuk, Jakub

(56) References cited:
- EP-A1- 2 241 476
- WO-A1-2014/064262
- FR-A1- 2 997 352

## Description

The invention relates to a child safety seat with a device for pretensioning an integrated safety belt harness restraining a child in the seat. The device for pretensioning the safety harness is intended to reduce the possibility of uncontrolled movement of the child's body in relation to the safety seat shell in the initial phase of a frontal or side collision of a vehicle and to actuate, within as short a time as possible, a device to reduce child's head displacement if provided in the safety seat. The application of a safety belt pretensioning system makes it possible to reduce the maximum decelerations that act on the body of a child transported in a motor vehicle in a safety seat during a road accident.

It is anticipated that the safety seat provided with the device for pretensioning the integrated safety harness will be mounted in the vehicle by means of the ISOFIX system with an anti-rotation device, in particular the ISOFIX top-tether. During a frontal impact of the motor vehicle, the device for pretensioning the integrated safety belts pulls, in the initial phase of its operation, the harness to take up the safety belt slack and thus to tighten the straps of the integrated safety harness on the child's torso. In the second phase of its operation, the harness pretensioner keeps pulling the safety belt strap with a predefined limited force, in result of which the child's torso begins to act through the integrated safety harness onto the safety seat components earlier than it would do in the case of a safety seat having no device for pretensioning the integrated safety harness. The earlier action of the child's body on safety seat components means earlier start of the process of slowing down the child's body during a frontal vehicle collision.

Thanks to this, the controlled process of slowing down the child's body may be gentler (with lower deceleration values) and the risk of serious injuries to the child's body may be thus reduced. At a side vehicle collision, the device for pretensioning the integrated safety harness again pulls, as it is in the case of a frontal collision, the harness to take up the safety belt slack and to tighten the straps of the integrated safety harness on the child's torso to hold the child more firmly in the safety seat shell. Simultaneously, the device for pretensioning the integrated safety harness additionally actuates the device to reduce child's head displacement, installed at the upper part of the side walls of the safety seat backrest. In the case of a side collision, the sufficiently early actuation of the device to reduce child's head displacement is very important for child's safety because it provides a possibility of child's head protection and prevents direct contact between the child's head and vehicle parts.

For safety reasons, the device for pretensioning the integrated safety harness is provided with a mechanism preventing accidental actuation of the device during normal use of the safety seat and, as well, with a mechanism that slackens the integrated safety harness immediately after the end of the collision phase.

The reduction of the dynamic loads acting on passenger's body during a vehicle collision is particularly important in the case of transporting small children, who are far more susceptible to dynamic loads in comparison with the adults.

This is because of unfavourable proportions of the child's body. This particularly applies to the proportion of head dimensions and mass to the dimensions and mass of the whole body, e.g. in a two-year-old child, the ratio of head "length" to the total body length is 1/5 while this ratio in a young boy or girl aged 15 years is 1/7. The mass of the head of a new-born baby makes as much as 25 % of the total body mass (as against 6 % for the adults). This in combination with the weak spine, especially the cervical vertebras, of the child causes a possibility of severe injuries that might occur in the case of even insignificant decelerations during a road accident. On the other hand, even small head injuries in a little child may cause brain injuries because the joints between cranial bones have not been ossified yet (fontanelle). The strength of the osseous system of a small child, where cartilaginous tissue predominates, is much lower than that of the adults.

In the engineering design solutions of the child restraint systems being in use at present, chiefly the standard vehicle seat belts or safety belt harnesses integrated with child safety seats are employed to slow down the child's body during a frontal vehicle collision and such solutions offer a relatively low degree of protection from the threats that might occur during a side impact. This is because the type-approval requirements (which must be met by a device so that it might be used in vehicles and marketed) applicable until quite recently to the child restraint systems were defined with only frontal collision test results being taken as a basis. The new UN ECE Regulation No. 129, according to which type-approval tests of child restraint systems are now carried out, includes side impact test requirements as well.

Only a few manufacturers of child safety seats offer enhanced child protection level by introducing new materials and additional energy-absorbing elements.

The currently marketed models of the child restraint systems to be used in vehicles are not provided with such systems as the device for pretensioning an integrated safety harness. This means that no child safety seats with integrated safety harness pretensioners that function similarly to the spring-type or pyrotechnic seat belt pretensioning systems installed in vehicles and designed for the adults are available in the market. So far, only a system for automatic pretensioning of the integrated safety harness, capable of checking and adjusting the harness tension throughout the journey, has been introduced into the market by Römer to their King II ATS seat model.

The solution known from EP 2241476 B1 is a vehicle child seat (child safety seat) for directly fastening to a vehicle seat, comprising a backrest, a seat surface, an integrated belt system for fastening a child in the vehicle child seat, and a belt pretensioning device comprising a trigger sensor mechanism, an energy storage device, and a pretensioning mechanism, which in the event of an exceedance of a defined threshold force acting on the vehicle child seat, in particular a crash force, abruptly tensions the belt system. The child seat known from EP 2241476 B1 is an improvement to the solution revealed in US 2007/0228787 A1.

The objective of the present invention is to improve the vehicle child seat provided with the seat belt pretensioning function, especially with regard to the effectiveness and reliability of the safety seat. According to this invention, this objective will be accomplished by introducing a child safety seat having the features as specified in claim 1. The advantageous embodiment versions are covered by the dependent claims.

The incorporation of a safety belt pretensioning system into the vehicle child seat structure is aimed at reducing the maximum decelerations that would act on the body of a child transported in a motor vehicle in a safety seat during a road accident. The safety harness pretensioner is to ensure earlier start of the process of slowing down the child's body during a frontal collision. Thanks to this, the controlled process of slowing down the child's body may be gentler (with lower deceleration values) and the risk of serious injuries to the child's body may be thus reduced.

It should be noticed that the child safety seat to EP 2241476 is secured in the vehicle by means of a vehicle seat belt or with the use of the known ISOFIX child safety seat fastening system, while the use of the vehicle seat belt to secure the child safety seat makes it practically impossible to achieve the objective, i.e. to cause earlier start of the process of slowing down the child's body (even if the harness pretensioning system functions perfectly).

In an advantageous embodiment of the present invention, it is anticipated that the child safety seat will exclusively be secured in the vehicle by means of the ISOFIX system with an anti-rotation device, preferably the ISOFIX top-tether, which offers a possibility of correct and effective functioning of the pretensioning system.

For effective functioning of the harness pretensioner to be possible, i.e. for the pretensioner to be capable of serving its purpose, the pretensioner should be actuated instantly (immediately following the instant of vehicle collision) and operate as quickly as possible. The actuation of the pretensioner, understood as the start of pulling the straps of the integrated safety belts, should take place within 10 milliseconds from the instant of vehicle collision and the pretensioner operation should be terminated after the next period of ten to twenty milliseconds. This task is difficult for being fulfilled and it requires the use of a reliable sensor of adequate sensitivity, situated in an appropriate place, to trigger the pretensioner. The present invention, like the child safety seat to EP 2241476, is an integral device and does not use any sensors or other components of the vehicle safety system, apart from the safety seat fastening elements.

In the child safety seat to EP 2241476, a sensor with an inertial mass is used for triggering the pretensioner; in both the embodiment examples presented, the sensor is a component of the pretensioner proper, which is situated under the seat bottom (claim 2, item 61 and 161 in Figs. 6 and 8 in EP 2241476). Such a solution does not ensure the pretensioner triggering to be adequately quick, because a change in the velocity of the inertial mass will be delayed in relation to the change in the vehicle velocity due to flexibility of the safety seat components that are involved in the transmission of the inertia forces from the vehicle structure to the sensor fastening place in the pretensioner.

In an advantageous embodiment of the present invention, the deceleration sensor (a commercial design offered in the market) is placed directly on the fastening elements of the ISOFIX safety seat securing system, thanks to which the time delay in the deceleration detected by the sensor in relation to the vehicle deceleration is reduced to the achievable minimum. At the instant when the vehicle deceleration exceeds a prescribed threshold value, a triggering signal is electrically transmitted to the pyrotechnic element of the mechanism that actuates the pretensioner. Such a solution ensures an adequately quick (within 10 ms from the instant of collision) actuation of the pretensioner.

The seat belt straps used in vehicles and child safety seats must meet the requirements specified in UN ECE Regulations Nos. 16, 44, and 129 and concerning the strap capability of transmitting tensile forces, strap elongation under load, and endurance, including abrasion resistance. The seat belt strap when loaded with a specific tensile force undergoes a corresponding elongation. The absolute elongation of a seat belt strap is directly proportional to the length of the strap being tensioned. This means that for a prescribed identical force to develop in two belt strap specimens of different length, the specimen being e.g. with half the length of the other one will have to be extended to an absolute elongation being half of that of the other one. Therefore, the belt straps subject to loading by a pretensioner should be as short as possible. In such case, the displacement of the working pretensioner elements can be relatively small and, in consequence, the belt pretensioning time will be within the acceptable limits, which would translate into achieving the objective in attaining earlier start of the process of slowing down the child's body.

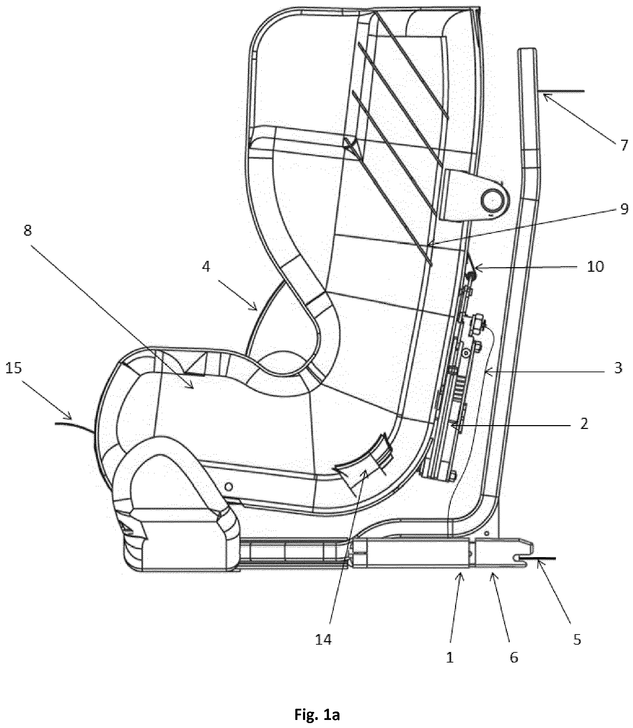

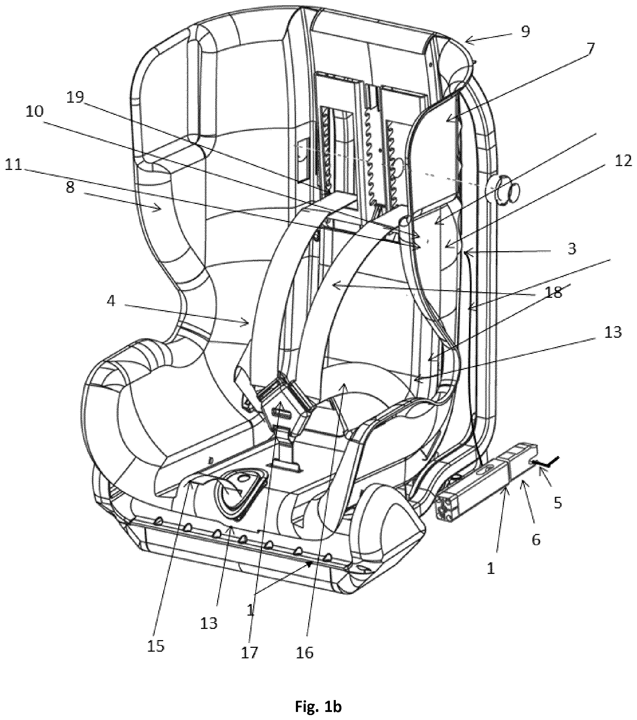

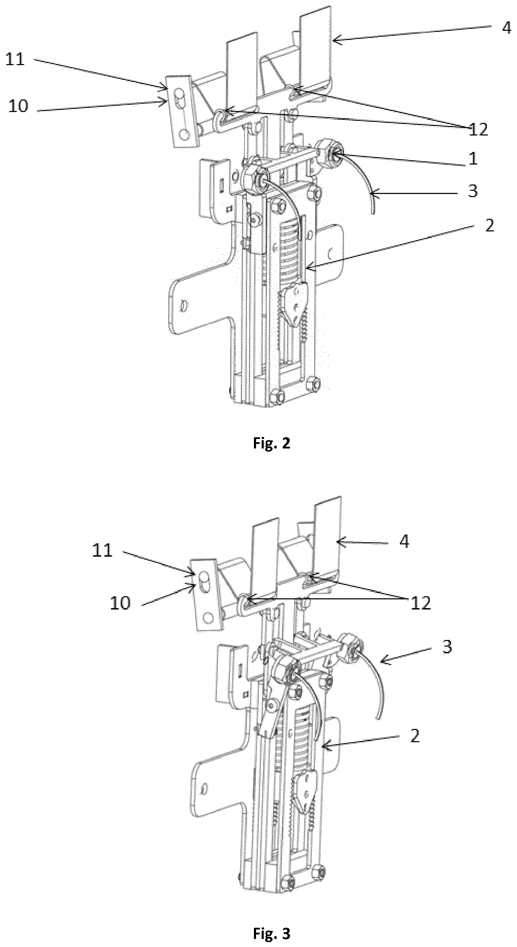

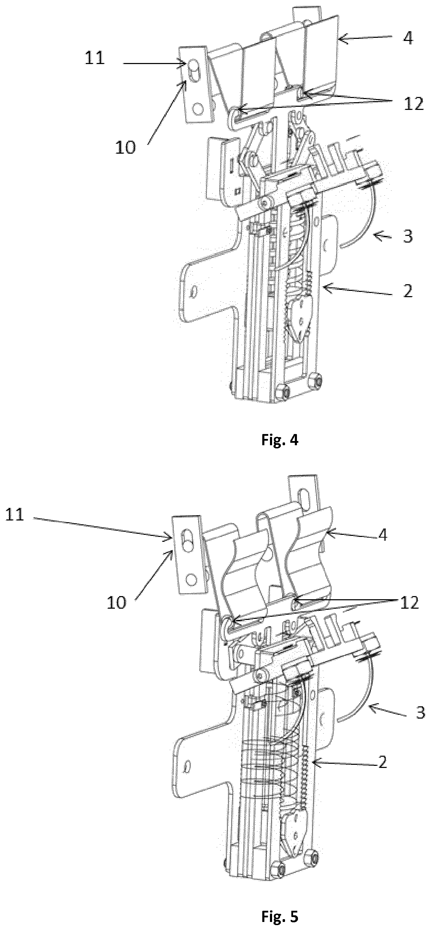

In the child safety seat to EP 2241476, a solution has been adopted (see the description and both embodiment examples) where the lap/pelvis belt portions (12 in Fig. 1) are permanently anchored in the seat bottom and, at their other ends, merge in one piece with one of two respective shoulder belt portions (13 in Fig. 1) to be then coupled with one another and with a common adjusting belt portion, which is finally secured to the seat bottom by means of a known unidirectional belt securing device (adjusting mechanism 16 in Fig. 4). The person that places a child in the safety seat unlocks the belt securing device (16 in Fig. 4), thanks to which the effective length of the lap and shoulder portions of the safety harness can be increased and the child can be placed in the seat, and then pulls the free end of the adjusting belt portion (15 in Fig. 2) to take up the slack of the safety harness. In the embodiment design as shown in EP 2241476, the harness pretensioner (31 in Figs. 3 and 4) situated under the seat bottom acts on the adjusting belt portion (15 in Fig. 2) to extend the length of its routing through a system of movable belt deflectors. In such a system design, the very complicated belt pretensioning mechanism (31 in Figs. 3 and 4) unnecessarily acts on a very long part of the belt (12, 13, 15, right to belt securing device 16), only delimited by the places where the belt is anchored/ secured to the seat bottom. Moreover, the longer the belt is and the more guiding and deflecting parts are in contact with the belt, the stronger resistance forces counteract any belt sliding, which hampers the pretensioner operation. In consideration of the facts that the parts used as belt strap guides in the seat shell show some flexibility and that most of the known unidirectional belt locking devices cannot prevent the belt from some reverse sliding before it is finally locked, the belt pretensioning mechanism proposed in EP 2241476 may be expected to be not very effective, i.e. to have rather marginal impact on the process of slowing down the child's body during an accident. The reference numerals that identify individual parts in the drawings and the numbers of specific figures as given in this paragraph refer to publication EP 2241476 B1.

In the child safety seat to EP 2241476, a seat belt force limiting function is incorporated in the belt pretensioning mechanism, that additionally complicates the pretensioner construction, in result of which a number of questions arise regarding the reliability of functioning of the solution proposed. The child restraint system must function reliably, without producing any additional hazards to the child's health.

The child who fortunately has survived an accident still remains fastened to the seat with the safety harness (until the arrival of help), while the harness may remain tightened with a significant force due to the operation of the harness pretensioner (this force may prevent the buckle from being released). If the child is left in such a situation for too long a time, this may be dangerous for its health. Therefore, a correctly functioning and safe vehicle child seat with a harness pretensioner must ensure the harness to be released immediately after an accident. In the child safety seat according to EP 2241476, such a function has not been provided, which constitutes a drawback being serious enough to prevent the solution proposed from being used.

The present invention relates to a child safety seat with a device for pretensioning an integrated safety belt harness restraining a child in the seat, used to reduce the maximum values of the decelerations acting on the body of a child seated in a safety seat in a motor vehicle during a frontal or side collision and provided with seat securing means compatible with the ISOFIX system with an anti-rotation device, preferably the ISOFIX top-tether, where the device for pretensioning an integrated safety belt harness includes an activating mechanism and an actuating mechanism pulling the straps of the integrated safety harness, with the activating mechanism being connected by a conductor transmitting electric signals with the actuating mechanism, to which the safety harness straps are attached, characterized in that the activating mechanism is connected with the seat securing means compatible with the ISOFIX system and comprises a deceleration sensor placed directly on the fastening elements of the ISOFIX system.

In an advantageous embodiment, a child safety seat according to this invention comprises a harness slackening device to ease the integrated safety belt harness of the child safety seat, set up so that, when the vehicle comes to a standstill after the collision and there is no reason for loading the child's body with excessive forces any longer, the slackening device eases the excessive tension in the harness straps but still keeps holding the child in its sitting position in the safety seat.

In such a case, in an advantageous embodiment, the device for pretensioning the integrated safety harness incorporates a mechanism to adjust the integrated safety harness with a unidirectional belt securing device, an adjusting belt portion bifurcating into two lap/pelvis belt portions, which are passed through additional unidirectional belt locking devices situated in the seat bottom and then, after being redirected by the buckle, become shoulder belt portions and are passed through roller belt deflectors placed in the safety seat backrest at a height adjustable according to the child size and then through movable harness pretensioner rollers and are finally secured to rollers of the harness slackening device situated in the safety seat backrest.

In an advantageous embodiment, the actuating mechanism is situated in the safety seat backrest, directly at the shoulder belt fastening points.

In an advantageous embodiment, the actuating mechanism is set up so that, when activated, it directly acts on the shoulder belt portions and tightens only the shoulder belt portions and lap/pelvis belt portions that are situated between the additional belt locking devices placed in the safety seat bottom and the rollers of the harness slackening device.

In an advantageous embodiment, the actuating mechanism is set up to be activated within as short a time from the instant of impact as possible so that it could tighten the safety harness on the child's body with a predetermined force to hold the child more firmly in the safety seat shell and to enable running as effective a process of slowing down the child's body as possible.

In an advantageous embodiment, a child safety seat according to this invention comprises additional unidirectional belt locking devices for preventing any sliding of safety belt strap parts at the instant of vehicle collision by firmly fixing the lap belt portions to the safety seat bottom, thus reducing to a minimum the length of the seat belt parts that are pulled by the actuating mechanism.

The device to which the invention is related has been presented, in the form of an embodiment example, with reference to the accompanying drawings in which:
Fig. 1 shows a general side (Fig. 1a) and front view (Fig. 1b) of components of the device for pretensioning the integrated safety harness and an example of their location in the child safety seat system;
Fig. 2 shows a general view and location of components of the device for pretensioning the integrated safety harness immediately before an accident;
Fig. 3 shows a general view and location of components of the device for pretensioning the integrated safety harness immediately after a collision, at the instant when the activating mechanism has already been triggered in result of rising inertia forces but the actuating mechanism has not been activated / unlocked yet;
Fig. 4 shows a general view and location of components of the device for pretensioning the integrated safety harness in a short while after the actuating mechanism was activated / unlocked (when the mechanism is operating);
Fig. 5 shows a general view and location of components of the device for pretensioning the integrated safety harness in a short while after the end of the collision phase (when the vehicle and the child came to a standstill), when the actuating mechanism is easing the tension in the harness straps.

The reference numerals used in the drawings have the meaning as follows: 1 - activating mechanism; 2 - actuating mechanism; 3 - conductor transmitting electric signals; 4 - straps of the safety harness integrated with the child safety seat; 5 - ISOFIX anchorage element connected with the vehicle body; 6 - ISOFIX attachment connected with the child safety seat; 7 - ISOFIX top-tether strap and hook connected with the child safety seat; 8 - safety seat bottom; 9 - safety seat backrest; 10 - harness slackening device; 11 - roller of the harness slackening device; 12 - harness pretensioner roller; 13 - known unidirectional belt securing device; 14 - additional unidirectional belt locking device; 15 - adjusting belt portion; 16 - lap belt portion; 17 - harness buckle; 18 - shoulder belt portion; 19 - roller belt deflectors in the safety seat backrest.

The device for pretensioning the integrated safety harness, to which the invention is related, is intended for being used with safety seats for children with a mass ranging from 9 kg to 36 kg. The device for pretensioning the integrated safety harness includes two mechanisms cooperating with each other: activating mechanism 1 and actuating mechanism 2, connected with each other by link 3 (cable, rod, or wire transmitting electric signals) or electric connection. During a vehicle collision, activating mechanism 1, by employing elements of the ISOFIX system to secure the child safety seat in a vehicle (anchorage element 5 connected with the vehicle body and attachment 6 connected with the child safety seat), sends within as short a time as possible an electric signal via conductor 3 to activate / unlock actuating mechanism 2. Actuating mechanism 2, having been activated / unlocked, pulls shoulder belt straps 18 of the integrated safety harness of the child safety seat in order to cause as quickly as possible controlled contact (predetermined tensioning force) between child's / dummy's torso and safety harness straps 4. After the collision phase is finished, harness slackening device 10 eases straps 4 of the integrated safety harness. Keeping the straps under strong tension without special safety reasons might involve discomfort or, in certain circumstances, even additional hazard to the child.

Activating mechanism 1 is basically intended for being attached to the ISOFIX system elements that secure the child safety seat in a vehicle (e.g. anchorage element 5 connected with the vehicle body and attachment 6 connected with the child safety seat); while actuating mechanism 2 is basically intended for being incorporated in the safety seat structure, in particular on the rear side of the safety seat backrest 9 and at one end, it is connected by electric conductor 3 with activating mechanism 1 and at the other end, it is provided with means for pulling straps 4 of the integrated safety harness.

In an advantageous embodiment of the present invention, the functions of pretensioning and adjustment of the harness are separated from each other. The length of the safety belt straps can again be adjusted by means of the known adjusting mechanism with unidirectional belt securing device 13 when a child is being placed in the safety seat and adjusting belt portion 15 again bifurcates into two branches, but in this case the said branches are lap/pelvis belt portions 16, which are passed through additional unidirectional belt locking devices 14 situated in seat bottom 8 and then, after being redirected by buckle 17, become shoulder belt portions 18 and are passed through roller belt deflectors 19 placed in safety seat backrest 9 (at a height adjustable according to the child size) and then through movable harness pretensioner rollers 12 and are finally fastened to rollers 11 of harness slackening device 10 situated in the safety seat backrest. According to the present invention, the harness pretensioner activated during an accident directly acts on shoulder belt portions 18 and tightens only the parts of shoulder belt portions 18 and lap/pelvis belt portions 16 that are directly involved in the process of slowing down the child's body, i.e. are situated between additional unidirectional belt locking devices 14 placed in the safety seat bottom and rollers 11 of harness slackening device 10. The additional belt locking devices differ from other known unidirectional locking devices in that they prevent the belts from sliding when being locked. The harness pretensioner acts on the harness straps through harness pretensioner rollers 12, which have the nature of a moving compound pulley in the belt strap guiding system and, therefore, reduce by half the stroke of the actuating element of actuating mechanism 2 responsible for adequate tightening of the harness. The solution adopted in the design of the harness adjustment and pretensioning system according to the present invention together with the placing of actuating mechanism 2 in safety seat backrest 9 directly at the shoulder belt 18 fastening points enables quick (meeting the requirements), i.e. effective, operation of the harness pretensioner and earlier start of the process of slowing down the child's body.

In an advantageous embodiment of the present invention, the function of limiting the harness strap forces during pretensioning has been abandoned. The pretensioner spring force has been selected so that it will not cause a hazard to the child's health. The pretensioner must operate reliably. It should be triggered in case, and exclusively in case, of an accident. During an accident, the child's body should be restrained with the use of the safety harness of the child safety seat. The value of the force applied by the harness, necessary to restrain the child's body within a specific distance being available, depends above all on the intensity of the vehicle collision, i.e. on the values of the decelerations of vehicle body components. In the child safety seat according to the invention, the pretensioner triggering threshold has been set on such a level that the forces that develop in the safety seat harness straps in the later phases of the collision, necessary to restrain the child's body, significantly exceed those caused by pretensioner components and acting in the harness pretensioning phase. Thanks to this, the application of the safety harness pretensioning device will not cause any additional hazards to the child's health. At correct and adequately quick actuation and operation of the harness pretensioner, and if the child's position in the safety seat is correct, i.e. if the child is leaning against the seat backrest, the harness pretensioning process will include first of all the taking up of excessive slack of the harness straps on the child's body and only in the final phase of the harness pretensioning process, the child's body will begin to apply inertial forces to the safety belt straps. The child's body will begin to be slowed down much earlier than it would be in the case of a safety seat without a pretensioning device.

In an advantageous embodiment of the present invention, additional harness slackening device 10, developed by the authors of the invention, has been introduced the purpose of which is to improve the child's safety during an accident and to eliminate any hazards that might be posed by the introduction of the harness pretensioning mechanism. For this purpose to be achieved, the harness slackening device is to reduce the high tension present in the safety belts restraining the child during the period from about 1 second to 3 seconds from the instant of vehicle collision.

## Claims

1. A child safety seat with a device for pretensioning an integrated safety belt harness restraining a child in the seat, used to reduce the maximum values of the decelerations acting on the body of a child seated in a safety seat in a motor vehicle during a frontal or side collision, comprising seat securing means compatible with the ISOFIX system (5, 6) with an anti-rotation device, preferably the ISOFIX top-tether, where the device for pretensioning an integrated safety belt harness includes an activating mechanism (1) and an actuating mechanism (2) pulling the straps (4) of the integrated safety harness, with the activating mechanism (1) being connected by a conductor (3) transmitting electric signals with the actuating mechanism (2), to which the safety harness straps (4) are attached, **characterized in that** the activating mechanism (1) is connected with the seat securing means compatible with the ISOFIX system (5, 6) and comprises a deceleration sensor placed directly on the fastening elements of the ISOFIX system (5, 6).

2. A child safety seat according to claim 1, **characterized in that** it comprises a harness slackening device (10) to ease the integrated safety belt harness (4) of the child safety seat, set up so that, when the vehicle comes to a standstill after the collision and there is no reason for loading the child's body with excessive forces any longer, the slackening device (10) eases the excessive tension in the harness straps (4) but still keeps holding the child in its sitting position in the safety seat.

3. A child safety seat according to claim 2, **characterized in that** the device for pretensioning the integrated safety harness incorporates a mechanism to adjust the integrated safety harness with a unidirectional belt securing device (13), an adjusting belt portion (15) bifurcating into two lap/pelvis belt portions (16), which are passed through additional unidirectional belt locking devices (14) situated in the seat bottom (8) and then, after being redirected by the buckle (17), become shoulder belt portions (18) and are passed through roller belt deflectors (19) placed in the safety seat backrest (9) at a height adjustable according to the child size and then through movable harness pretensioner rollers (12) and are finally secured to rollers (11) of the harness slackening device (10) situated in the safety seat backrest.

4. A child safety seat according to claim 1, 2, or 3, **characterized in that** the actuating mechanism (2) is situated in the safety seat backrest (9), directly at the shoulder belt (18) fastening points.

5. A child safety seat according to claim 1, 2, 3, or 4, **characterized in that** the actuating mechanism (2) is set up so that, when activated, it directly acts on the shoulder belt portions (18) and tightens only the shoulder belt portions (18) and lap/pelvis belt portions (16) that are situated between the additional belt locking devices (14) placed in the safety seat bottom and the rollers (11) of the harness slackening device (10).

6. A child safety seat according to one of the preceding claims from 1 to 5, **characterized in that** the actuating mechanism (2) is set up to be activated within as short a time from the instant of impact as possible so that it could tighten the safety harness (4) on the child's body with a predetermined force to hold the child more firmly in the safety seat shell and to enable running as effective a process of slowing down the child's body as possible.

7. A child safety seat according to one of the preceding claims from 1 to 6, **characterized in that** it comprises additional unidirectional belt locking devices (14) for preventing any sliding of safety belt strap parts (4) at the instant of vehicle collision by firmly fixing the lap belt portions (16) to the safety seat bottom (8), thus reducing to a minimum the length of the seat belt parts (4) that are pulled by the actuating mechanism (2).

## Patentansprüche

1. Kindersicherheitssitz mit einer Vorrichtung zum Anspannen eines integrierten Sicherheitsgurtes, der ein Kind in den Sitz zurückhält, um die Maximalwerte der Verzögerungen zu reduzieren, die auf den Körper eines Kindes wirken, das in einem Sicherheitssitz in einem Kraftfahrzeug während eines Frontal- oder Seitenaufprall sitzt, der eine mit einem ISOFIX-System kompatiblen Sitzsicherungseinrichtung (5, 6) mit einer Verdrehsicherung umfasst, vorzugsweise dem ISOFIX Top-Tether, wobei die Vorrichtung zum Anspannen eines integrierten Sicherheitsgurtes einen Aktivierungsmechanismus (1) und einen Betätigungsmechanismus (2) zum Ziehen der Gurte (4) des integrierten Sicherheitsgurtes aufweist, wobei der Aktivierungsmechanismus (1) durch einen elektrische Signale übertragenden Leiter (3) mit dem Betätigungsmechanismus (2) verbunden ist, an dem die Sicherheitsgurte (4) befestigt sind, **dadurch gekennzeichnet, dass** der Aktivierungsmechanismus (1) mit dem mit dem ISOFIX-System (5, 6) kompatiblen Sitzsicherungseinrichtung verbunden ist und einen direkt an den Befestigungselementen des ISOFIX-Systems (5, 6) angeordneten Verzögerungssensor aufweist.

2. Kindersicherheitssitz nach Anspruch 1, **dadurch gekennzeichnet, dass** er eine Vorrichtung zur Lockerung der Gurte (10) umfasst, um den integrierten Sicherheitsgurt (4) des Kindersicherheitssitzes zu entspannen, so ausgeführt, dass wenn das Fahrzeug nach dem Zusammenstoß zum Stillstand kommt und es keinen Grund gibt, den Körper des Kindes mit übermäßigen Kräften zu belasten, die Vorrichtung zur Lockerung (10) die übermäßige Spannung in den Sicherheitsgurten (4) reduziert, hält aber das Kind immer noch in der Sitzposition im Kindersicherheitssitz.

3. Kindersicherheitssitz nach Anspruch 2, **dadurch gekennzeichnet, dass** die Vorrichtung zum Anspannen des integrierten Sicherheitsgurts einen Mechanismus zum Einstellen des integrierten Sicherheitsgurtes mit einer unidirektionalen Gurtsicherungsvorrichtung (13) aufweist, wobei sich ein Verstellgurtteil (15) in zwei durchlaufenden Beckengurtabschnitte (16) verzweigt, die durch zusätzliche, in dem Sitzboden (8) liegende, unidirektionale Gurtverriegelungsvorrichtungen (14) geführt sind, und dann, nachdem sie von der Schnalle (17) umgelenkt worden sind, zu Schultergurtteilen (18) übergehen und durch die in der Sitzlehne (9) des Kindersicherheitssitzes gelagerten Rollenumlenker (19) geführt werden, die höhenverstellbar nach der Kindergröße sind, und dann durch bewegliche Gurtvorspannrollen (12) geführt werden und schließlich an Rollen (11) der Vorrichtung zur Lockerung der Gurte (10), die sich in der Sitzlehne des Kindersicherheitssitzes befindet, befestigt sind.

4. Kindersicherheitssitz nach Anspruch 1, 2 oder 3, **dadurch gekennzeichnet, dass** sich der Betätigungsmechanismus (2) in der Sitzlehne (9) des Kindersicherheitssitzes, direkt an den Befestigungspunkten des Schultergurtes (18) befindet.

5. Kindersicherheitssitz nach Anspruch 1, 2, 3 oder 4, **dadurch gekennzeichnet, dass** der Betätigungsmechanismus (2) so ausgeführt wird, dass er bei der Betätigung direkt auf die Schultergurtteile (18) einwirkt und nur die Schultergurtteile (18) und Beckengurtteile (16) anspannt, die sich zwischen den zusätzlichen Gurtverriegelungsvorrichtungen (14) befinden, die in dem Kindersicherheitssitzboden und den Rollen (11) der Vorrichtung zur Lockerung der Gurte (10) angeordnet sind.

6. Kindersicherheitssitz nach einem der vorhergehenden Ansprüche 1 bis 5, **dadurch gekennzeichnet, dass** der Betätigungsmechanismus (2) so ausgeführt wird, dass er innerhalb einer möglichst kurzer Zeit nach dem Fahrzeugaufprall aktiviert wird, so dass er den Sicherheitsgurt (4) am Körper des Kindes mit einer vorgegebenen Kraft anspannen kann, um das Kind fester in der Sicherheitssitzschale zu halten und um möglichst effektive Verlangsamung des Körpers des Kindes zu bewirken.

7. Kindersicherheitssitz nach einem der vorhergehenden Ansprüche 1 bis 6, **dadurch gekennzeichnet, dass** er zusätzliche unidirektionale Gurtverriegelungsvorrichtungen (14) zum Verhindern der Verschiebung von Sicherheitsgurtteilen (4) zum Zeitpunkt der Fahrzeugaufprall durch feste Fixierung der Beckengurtteile (16) an dem Kindersicherheitssitzboden (8) durch die Reduktion der Länge der Sicherheitsgurtteile (4), die von dem Betätigungsmechanismus (2) gezogen werden, auf ein Minimum.

## Revendications

1. Un siège de sécurité pour enfant avec un dispositif pour prétendre un harnais de ceinture de sécurité intégré retenant un enfant dans le siège, utilisé pour réduire les valeurs maximales des décélérations agissant sur le corps d'un enfant assis dans un siège de sécurité dans un véhicule à moteur lors d'une collision frontale ou latérale, comprenant des moyens de fixation de siège compatibles avec le système ISOFIX (5, 6) avec un dispositif anti-rotation, de préférence l'ancrage supérieur ISOFIX, où le dispositif pour prétendre un harnais de ceinture de sécurité intégré comprend un mécanisme d'activation (1) et un mécanisme d'actionnement (2) tirant les sangles (4) du harnais de sécurité intégré, avec le mécanisme d'activation (1) étant relié par un conducteur (3) transmettant des signaux électriques au mécanisme d'actionnement (2) auquel sont attachées les sangles de harnais de sécurité (4), **caractérisé en ce que** le mécanisme d'activation (1) est relié aux moyens de fixation du siège compatibles avec le système ISOFIX (5, 6) et comprend un capteur de décélération placé directement sur les éléments de fixation du système ISOFIX (5, 6).

2. Un siège de sécurité pour enfant selon la revendication 1, **caractérisé en ce qu'**il comprend un dispositif de relâchement de harnais (10) pour soulager le harnais de ceinture de sécurité intégré (4) du siège de sécurité pour enfant, mis en place de telle sorte que, quand le véhicule s'arrête après la collision et il n'y a aucune raison de charger le corps de l'enfant avec des forces excessives plus longtemps, le dispositif de relâchement (10) soulage la tension excessive dans les sangles de harnais (4) mais garde toujours l'enfant en position assise dans le siège de sécurité.

3. Un siège de sécurité pour enfant selon la revendication 2, **caractérisé en ce que** le dispositif pour prétendre le harnais de sécurité intégré incorpore un mécanisme pour ajuster le harnais de sécurité intégré avec un dispositif de fixation de ceinture unidirectionnel (13), une partie de ceinture de réglage (15) bifurquant en deux parties de ceinture de giron/pelvis (16), qui sont passées à travers des dispositifs de verrouillage de ceinture unidirectionnels supplémentaires (14) situés dans le fond du siège (8) et puis, après avoir été redirigées par la boucle (17), deviennent des parties de ceinture d'épaule (18) et sont passées à travers les déflecteurs de ceinture à rouleaux (19) placés dans le dossier de siège de sécurité (9) à une hauteur réglable selon la taille de l'enfant, et puis à travers des rouleaux prétensionneurs de harnais mobiles (12) et sont enfin fixées aux rouleaux (11) du dispositif de relâchement de harnais (10) situé dans le dossier de siège de sécurité.

4. Un siège de sécurité pour enfant selon la revendication 1, 2 ou 3, **caractérisé en ce que** le mécanisme d'actionnement (2) est situé dans le dossier de siège de sécurité (9), directement aux points de fixation de la ceinture d'épaule (18).

5. Un siège de sécurité pour enfant selon la revendication 1, 2, 3 ou 4, **caractérisé en ce que** le mécanisme d'actionnement (2) est mis en place de telle sorte que, lorsqu'il est activé, il agit directement sur les parties de ceinture d'épaule (18) et ne resserre que les parties de ceinture d'épaule (18) et les parties de ceinture de giron/pelvis (16) qui sont situées entre les dispositifs de verrouillage de ceinture supplémentaires (14) placés dans le fond du siège de sécurité et les rouleaux (11) du dispositif de relâchement de harnais (10).

6. Un siège de sécurité pour enfant selon l'une quelconque des revendications précédentes 1 à 5, **caractérisé en ce que** le mécanisme d'actionnement (2) est configuré pour être activé dans le temps le plus court possible à partir de l'instant de l'impact afin qu'il puisse serrer le harnais de sécurité (4) sur le corps de l'enfant avec une force prédéterminée pour maintenir l'enfant plus fermement dans la coque du siège de sécurité et pour permettre l'exécution d'un processus de ralentissement du corps de l'enfant le plus efficacement possible.

7. Un siège de sécurité pour enfant selon l'une quelconque des revendications précédentes 1 à 6, **caractérisé en ce qu'**il comprend des dispositifs de verrouillage de ceinture unidirectionnels supplémentaires (14) pour empêcher tout glissement des parties de sangle de ceinture de sécurité (4) au moment de la collision du véhicule en fixant fermement les parties de ceinture de giron (16) au fond du siège de sécurité (8), réduisant ainsi au minimum la longueur des parties de ceinture de sécurité (4) qui sont tirées par le mécanisme d'actionnement (2).
